# EUROPEAN PATENT APPLICATION

(11) **EP 4 510 291 A1**
(43) Date of publication of application: **19.02.2025**
(21) Application number: 23820010.9
(22) Date of filing: 17.05.2023
(51) Int. Cl.: H01M 10/42, H01M 50/59, H01M 50/595, H01M 50/586, H01M 10/0585, H01M 10/0569, H01M 10/0568, H01M 10/052, H01M 50/46, H01M 4/13

(54) **LITHIUM SECONDARY BATTERY AND MANUFACTURING METHOD THEREFOR**

(30) Priority: 07.06.2022 KR 20220069165; 15.06.2022 KR 20220073089; 12.05.2023 KR 20230061581
(71) Applicant: LG Energy Solution, Ltd., Seoul 07335 (KR)
(72) Inventor: KIM, Hyosik, Daejeon 34122 (KR); KIM, Minkyung, Daejeon 34122 (KR); JUN, Youngjin, Daejeon 34122 (KR); JUNG, Hyeri, Daejeon 34122 (KR); YOON, Jong Keon, Daejeon 34122 (KR); SOON, Jiyong, Daejeon 34122 (KR); KANG, Sungjoong, Daejeon 34122 (KR); KIM, Dong Kyu, Daejeon 34122 (KR)
(74) Representative: Goddar, Heinz J.
(86) International application number: PCT/KR2023/006687
(87) International publication number: WO 2023/239074

(57) **Abstract**

The present invention relates to a lithium secondary battery comprising: an electrode assembly containing an electrode and a porous coating layer formed on the electrode; and a flame retardant electrolyte containing a flame retardant solvent defined as a predetermined flash point, and a lithium salt, wherein the porous coating layer comprises polymer particles or ceramic particles having an absolute value of zeta potential of 25 mV or more, in order to improve stability while maintaining various performances of the lithium secondary battery.

## Description

### [TECHNICAL FIELD]

### Cross Citation with Related Application(s)

This application claims the benefits of Korean Patent Application No. 10-2022-0069165 filed on June 7, 2022, Korean Patent Application No. 10-2022-0073089 filed on June 15, 2022 and Korean Patent Application No. 10-2023-0061581 filed on May 12, 2023 in the Korean Intellectual Property Office, the disclosures of which are incorporated herein by reference in their entirety.

The present invention relates to a lithium secondary battery and a manufacturing method thereof.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

Lithium secondary batteries are generally configured to include a positive electrode, a negative electrode, a separator, and an electrolyte, and are known in the relevant technical field to include a positive electrode capable of generating oxygen due to an unstable structure in a charged state. Since the danger of ignition is great when oxygen is generated in this way, attempts have been made to research and develop methods for enhancing the safety of lithium secondary batteries.

**In** a lithium secondary battery, a separator is used to secure electrical insulation between a positive electrode and a negative electrode, and a thin film made of polyolefin is generally used as the separator. However, such a separator may easily shrink in a high temperature state and thus fail to ensure the insulation between a positive electrode and a negative electrode. **In** addition, when folding or mismatch of the separator occurs during the process of assembling the lithium secondary battery, the battery functions normally at the initial stage, but over time, lithium dendrites or the like are generated, which causes a short circuit. When electrical insulation between the positive electrode and the negative electrode becomes impossible, a short circuit may occur, which may interact with oxygen generated by the unstable positive electrode to cause ignition. **In** other words, when a lithium secondary battery in a charging state is short-circuited due to high temperature or impact applied during a process, there is a problem that the lithium secondary battery ignites.

**In** addition, it is known that the electrolyte of a lithium secondary battery includes a highly volatile and flammable solvent, but there is a problem that ignition occurs easily. **In** order to solve this problem, a flame retardant electrolyte containing a flame retardant solvent can be used, but there is a problem that such a flame retardant electrolyte is not well impregnated into a conventional separator. **If** the electrolyte is not well impregnated into the lithium secondary battery, the lithium ions cannot be transferred satisfactorily, which causes a problem that the capacity, output, and life characteristics of the lithium secondary battery are all deteriorated. Furthermore, if the electrolyte is not well impregnated into the lithium secondary battery, there is a problem that a non-uniform reaction occurs between the electrode and the electrolyte, thereby generating dendrites and causing a short circuit.

Therefore, in order to solve these problems, attempts have been made to research and develop a method of increasing the stability while maintaining various performances of the lithium secondary battery.

### [DETAILED DESCRIPTION OF THE INVENTION]

### [Technical Problem]

It is an object of the present invention to provide a lithium secondary battery that not only is improved in stability and suppresses ignition, but also is improved in electrolyte impregnation property and improves various characteristics, and a manufacturing method thereof.

### [Technical Solution]

According to the present invention, there is provided a lithium secondary battery comprising: an electrode assembly containing an electrode and a porous coating layer formed on the electrode; and a flame retardant electrolyte containing a flame retardant solvent having a flash point of 100°C or more or having no flash point, and a lithium salt, wherein the porous coating layer comprises polymer particles or ceramic particles having an absolute value of zeta potential of 25 mV or more.

Also, according to the present invention, a method for manufacturing a lithium secondary battery is provided. The manufacturing method may comprise the steps of: forming a porous coating layer containing polymer particles or ceramic particles having an absolute value of zeta potential of 25 mV or more on an electrode; forming an electrode assembly including an electrode coated with a porous coating layer; and impregnating the electrode assembly with a flame retardant electrolyte containing a flame retardant solvent having a flash point of 100°C or more or having no flash point, and a lithium salt.

### [Advantageous Effects]

In the lithium secondary battery of the present invention, a porous coating layer formed on the electrode is used instead of an existing separator in order to secure electrical insulation between the positive electrode and the negative electrode. In an electrode assembly including such a porous coating layer, the occurrence of a short circuit due to shrinkage of an existing separator can be suppressed, and ignition due to high temperature, external impact or the like can be reduced.

In addition, the lithium secondary battery includes a flame retardant electrolyte to suppress ignition, and also the flame retardant electrolyte is well impregnated into the electrode assembly including the porous coating layer so that a uniform reaction can occur throughout the electrode. Therefore, various performances such as capacity, output and life characteristics of the lithium secondary battery can be improved. Furthermore, in the lithium secondary battery, the electrolyte is well impregnated into the electrode assembly, and a uniform reaction occurs between the electrode and the electrolyte, thereby suppressing generation of dendrites and short circuits.

### [BRIEF DESCRIPTION OF THE DRAWINGS]

FIG. 1 is a schematic diagram showing an electrode assembly of a lithium secondary battery according to an embodiment of the present invention; and
FIGS. 2 to 5 show the results of hot box tests on lithium secondary batteries of Examples 1 to 3 and Comparative Example 1, respectively.

### [DETAILED DESCRIPTION OF THE EMBODIMENTS]

Terms or words used in the present specification and claims should not be construed as limited to ordinary or dictionary terms, and the present invention should be construed with meanings and concepts that are consistent with the technical idea of the present invention based on the principle that the inventors can appropriately define concepts of the terms to appropriately describe their own invention in the best way.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to one embodiment of the present invention, there is provided a lithium secondary battery comprising: an electrode assembly containing an electrode and a porous coating layer formed on the electrode; and a flame retardant electrolyte containing a flame retardant solvent having a flash point of 100°C or more or having no flash point, and a lithium salt, wherein the porous coating layer comprises polymer particles or ceramic particles having an absolute value of zeta potential of 25 mV or more.

As described above, the lithium secondary battery of one embodiment is configured such that a porous coating layer substantially replacing the existing separator is formed on the electrode of a positive electrode or a negative electrode within the electrode assembly, wherein such a porous coating layer includes polymer particles or ceramic particles having an absolute value of zeta potential greater than or equal to a certain level. The absolute value of the zeta potential may define the surface polarity of the polymer particles or ceramic particles, and having an absolute value greater than or equal to a certain level may mean that the surface polarity increases.

In addition, the flame retardant solvent contained in the battery of one embodiment has a higher polarity than the organic solvent contained in a general electrolyte for lithium ion battery. Therefore, as the porous coating layer containing the particles having high surface polarity is combined with a flame retardant solvent, excellent affinity between the flame retardant electrolyte and the electrode having the porous coating layer formed thereon is achieved, thereby exhibiting excellent impregnation property of the flame retardant electrolyte into the porous coating layer, and solving problems such as a short circuit due to thermal shrinkage of the existing separator.

Further, the lithium secondary battery of one embodiment includes a flame retardant electrolyte including a lithium salt and a flame retardant solvent having no flash point (substantially non-flammable) or having a flash point of 100°C or more. As a result, the porous coating layer can be uniformly impregnated with such a flame retardant electrolyte while suppressing ignition of the battery.

In this manner, the lithium secondary battery of one embodiment includes a porous coating layer replacing the separator and a predetermined flame retardant electrolyte, thereby suppressing short circuits and ignition, and exhibiting excellent stability, and also the flame retardant electrolyte is uniformly impregnated into the porous coating layer, thereby improving various electrochemical characteristics such as capacity, output or life characteristics.

Hereinafter, a lithium secondary battery and a manufacturing method thereof according to embodiments of the present invention will be described in more detail.

### Electrode Assembly

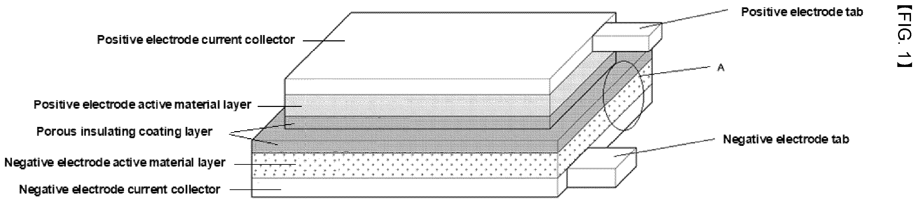

A lithium secondary battery of one embodiment basically includes an electrode assembly. As shown in FIG. 1, such an electrode assembly comprises an electrode including a positive electrode and a negative electrode, and a porous coating layer formed on the electrode, for example, the positive electrode and/or the negative electrode, and the porous coating layer comprises polymer particles or ceramic particles having an absolute value of zeta potential of 25 mV or more.

At this time, the zeta potential of the polymer particles or ceramic particles is a physical property that reflects the surface polarity of these particles and defines the electrostatic repulsive force or dispersibility between particles. The polymer particles or ceramic particles having a large absolute value of the zeta potential can be uniformly dispersed on the positive electrode active material layer to exhibit satisfactory and uniform coating properties, and a large number of fine and uniform pores that allow lithium ions to pass between these particles can be defined. In addition, due to the particles satisfying such a zeta potential, the porous coating layer may exhibit excellent impregnation property for a flame retardant electrolyte containing a flame retardant solvent. A combination of the porous coating layer and the flame retardant electrolyte allows the lithium secondary battery of one embodiment to exhibit excellent properties mentioned above.

The zeta potential of the polymer particles or ceramic particles can be measured, for example, by an electrophoretic light scattering method using a dynamic light scattering device. At this time, the zeta potential of the polymer particles or ceramic particles can be measured in a state where the particles are dispersed in water or an alcohol-based solvent without a separate dispersant. In a specific example, the zeta potential can be measured in a state in which the polymer particles or ceramic particles are dispersed at a concentration of 0.1 wt. % or less in a water solvent.

The absolute value of the zeta potential of the polymer particles or ceramic particles may be 25 mV or more, or 35 mV or more, or 45 mV or more, and 100 mV or less, or 90 mV or less, or 80 mV or less. Within this range, satisfactory coating properties and the like of the coating layer slurry can be achieved, and high impregnation properties of the flame retardant electrolyte can be secured, so that the battery of one embodiment can exhibit excellent stability and various electrochemical characteristics.

Specific examples of the polymer particles include at least one selected from the group consisting of polymethyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, polyethylene terephthalate, and polyphenylene sulfide.

Further, specific examples of the ceramic particles include at least one selected from the group consisting of boehmite (γ-AlO(OH)), Al₂O₃, TiO₂, Fe₂O₃, SiO₂, ZrO₂, Co₃O₄, SnO₂, NiO, ZnO, V₂O₅, and MnO.

The zeta potential of the polymer particles or ceramic particles can be controlled not only by the type of each particle, but also by the particle size or surface properties of these particles. Thus, in order to achieve the zeta potential and dispersibility of the polymer particles or ceramic particles, the appropriate porosity of the porous coating layer, and the like, the polymer particles or ceramic particles may have a particle size of 50 nm to 3 *µ*m, 50 nm to 1.5 *µ*m, or 100 nm to 1 *µ*m.

In addition, as will be described in more detail below, in order to control the surface properties of the polymer particles or ceramic particles and thereby adjust the zeta potential, and the like, the polymer particles or ceramic particles may be included in the coating layer slurry in a state of being surface-treated with oxygen plasma or ion beam.

Meanwhile, the porous coating layer may be configured so as to include a polymer binder, and the polymer particles or ceramic particles dispersed on the polymer binder. At this time, the polymer binder used herein may be a polymer of the same type as the binder included in the electrode active material layer, and specific examples thereof may include polyvinylidene fluoride, polyvinyl alcohol, carboxymethylcellulose (CMC), starch, hydroxypropyl cellulose, regenerated cellulose, polyvinylpyrrolidone, polytetrafluoroethylene, polyethylene (PE), polypropylene, ethylene-propylene-diene monomer, sulfonated ethylene-propylene-diene monomer, nitrile-based rubber, styrene-butadiene rubber, fluoro rubber, or the like, and a mixture or copolymer of two or more selected from these polymers can also be used. However, the specific composition of the polymer binder can be obviously determined by those skilled in the art in consideration of the type and characteristics of the polymer particles or ceramic particles, the method of forming the coating layer, and the like.

Moreover, considering the excellent coating properties of the above-mentioned coating layer slurry and the excellent dispersibility of the particles, the porous coating layer slurry may include the polymer binder and the polymer particles or ceramic particles in a weight ratio of 5:95 to 40:60, or 10:90 to 35:65.

The above-mentioned porous coating layer may include a plurality of pores having a thickness of 5 to 50 *µ*m, or 10 to 45 *µ*m, or 15 to 40 *µ*m, and a diameter of 10 nm or more, or 20 nm to 3 *µ*m, or 50 nm to 1 *µ*m, from the viewpoint of excellent impregnation property for flame-retardant electrolytes and effective replacement of the role of separator. At this time, the thickness of the porous coating layer may mean the total thickness of the porous coating layer formed on the positive electrode and/or the negative electrode.

Meanwhile, the electrode assembly including the above-mentioned porous coating layer may include, for example, a positive electrode having a positive electrode tab protruding from the positive electrode current collector; a negative electrode having a negative electrode tab protruding from the negative electrode current collector; and the porous coating layer formed on the positive electrode or the negative electrode so as to be arranged between the positive electrode and the negative electrode, as shown in FIG. 1.

Further, the positive electrode and the negative electrode may include a positive electrode active material layer and a negative electrode active material layer formed on the positive electrode current collector and the negative electrode current collector, respectively. The above-mentioned porous coating layer can be formed on the positive electrode active material layer and/or the negative electrode active material layer, and may be arranged between such positive and negative electrode active material layers in a state of contacting these. In more specific embodiments, as shown in FIG. 1, the porous coating layers can be formed on the positive and negative electrode active material layers, respectively, and the porous coating layer formed on the negative electrode active material layer and the porous coating layer formed on the positive electrode active material layer may contact each other.

Meanwhile, in the electrode assembly, the positive electrode current collector included in the positive electrode is not particularly limited as long as it has conductivity without causing a chemical change in the battery. For example, the current collector may be formed of stainless steel, aluminum, nickel, titanium, calcinated carbon, or aluminum, or aluminum or stainless steel that is surface-treated with carbon, nickel, titanium, silver, or the like.

Further, the positive electrode active material layer on the positive electrode current collector may include a positive electrode active material, a binder, and a conductive material.

At this time, the positive electrode active material may be a material capable of reversibly intercalating and deintercalating lithium, wherein the positive electrode active material may particularly include a lithium metal oxide containing lithium and at least one metal such as cobalt, manganese, nickel or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium -nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1), or the like, and any one thereof or a compound of two or more thereof may be used.

Among these materials, in terms of the improvement of capacity characteristics and stability of the battery, the lithium composite metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), or lithium iron phosphate (e.g., LiFePO₄) or the like, and any one thereof or a mixture of two or more thereof may be used.

Among these, a positive electrode active material having a nickel content of 80 atm% or more can be used in that the capacity characteristics of the battery can be most enhanced. For example, the lithium transition metal oxide may include one represented by the following Chemical Formula 1.

[Chemical Formula 1] LiₓNiₐCo_{b}M¹_{c}M²_{d}O₂

In Chemical Formula 1, M¹ may be at least one selected from Mn and Al, or a combination thereof.
M² may be at least one selected from the group consisting of Zr, B, W, Mg, Ce, Hf, Ta, La, Ti, Sr, Ba, F, P, and S.
x represents the atomic fraction of lithium in the lithium transition metal oxide, and may be 0.90≤x≤ 1.1, or 0.95≤x≤ 1.08, or 1.0≤x≤1.08.
a represents the atomic fraction of nickel among metal elements excluding lithium in the lithium transition metal oxide, and may be 0.80≤a<1.0, or 0.80≤a≤0.95, or 0.80≤a≤0.90. When the nickel content satisfies the above range, high capacity characteristics can be realized.
b represents the atomic fraction of cobalt among metal elements excluding lithium in the lithium transition metal oxide, and may be 0<b<0.2, 0<b ≤0.15, or 0.01≤b≤0.10.
c represents the atomic fraction of M¹ among metal elements excluding lithium in the lithium transition metal oxide, and may be 0<c<0.2, 0<c≤0.15, or 0.01≤c≤0.10.
d represents the atomic fraction of M² among metal elements other than lithium in the lithium transition metal oxide, and may be 0≤d≤0.1 or0≤d≤0.05.

The positive electrode active material may be included in an amount of 60 to 99 wt.%, 70 to 99 wt.%, or 80 to 98 wt.% based on the total weight of the positive electrode active material layer.

The binder is a component that assists in the binding between the active material, the conductive material and the like, and in the binding with the current collector. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene(PE), polypropylene, an ethylene-propylene-diene monomer, a sulfonated ethylene-propylene-diene monomer, a nitrile-based rubber, a styrene-butadiene rubber, a fluoro rubber, or the like, and a mixture or copolymer of two or more thereof may be used.

Typically, the binder may be included in an amount of 1 to 20 wt.%, 1 to 15 wt.%, or 1 to 10 wt.% based on the total weight of the positive electrode active material layer.

The conductive material is a component that further improves the conductivity of the positive electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

Typically, the conductive material may be included in an amount of 1 to 20 wt.%, 1 to 15 wt.%, or 1 to 10 wt.% based on the total weight of the positive electrode active material layer.

Meanwhile, the negative electrode in the electrode assembly may include a negative electrode current collector, a negative electrode active material layer including a negative electrode active material, a binder, a conductive material, and the like, and optionally the above-mentioned porous coating layer.

The negative current collector generally has a thickness of 3 to 500 *µ*m. The negative electrode current collector is not particularly limited as long as it has high conductivity without causing a chemical change in the battery, and, for example, copper, stainless steel, aluminum, nickel, titanium, calcinated carbon, copper or stainless steel that is surface-treated with one of carbon, nickel, titanium, silver, or the like, an aluminum-cadmium alloy, or the like may be used. Also, similar to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material may comprise at least one selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, Li_{X}Fe₂O₃(0≤x≤1), LiₓWO₂(0≤x≤1) and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1 ≤ y ≤ 3; 1≤z≤8) can be used as the metal composite oxide.

The material, which may be doped and undoped with lithium, may comprise Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may comprise lithium-containing titanium composite oxide (LTO), vanadium oxide, lithium vanadium oxide, and the like.

The negative electrode active material may be included in an amount of 60 to 99 wt. %, or 70 to 99 wt. %, or 80 to 98 wt. % based on a total weight of the negative electrode active material layer.

Meanwhile, the types of binders and conductive materials that can be contained in the negative electrode active material layer, and the contents of these materials are substantially the same as those described above for the positive electrode active material layer, additional descriptions thereof will be omitted below.

An example of an electrode assembly including the positive electrode, the negative electrode and a porous coating layer formed on these electrodes is shown in FIG. 1. Referring to FIG. 1, in the electrode assembly, the conductive surface (see "A" in FIG. 1) of the negative electrode may further include an insulating layer covering it at a position corresponding to the positive electrode tab of the positive electrode.

In general lithium secondary batteries, the negative electrode is often formed to have a larger area than the positive electrode in consideration of irreversible capacity at the initial stage of charging and discharging. However, due to this difference in area, the electrode assembly is crimped during the manufacturing process of the lithium secondary battery, and the positive electrode tab is bent, so that the positive electrode tab contacts the conductive surface ("A" in FIG. 1) of the negative electrode, which may cause a short circuit.

In this manner, the conductive surface ("A" in FIG. 1) of the negative electrode where a short circuit with the positive electrode tab may occur may be a negative electrode side surface corresponding to the positive electrode tab. Further, due to the difference in area between the positive electrode and the negative electrode, an exposed plane in which the negative electrode current collector is exposed without forming the negative electrode active material layer and the porous coating layer may be generated in the negative electrode plane. This exposed plane can also become a conductive surface ("A" in FIG. 1) of the negative electrode where a short circuit with the positive electrode tab can occur.

As the insulating layer is further formed so as to cover the conductive surface ("A" in FIG. 1) of the negative electrode, it is possible to prevent a short circuit due to bending of the positive electrode tab.

Meanwhile, the thickness of the insulating layer may be 100 *µ*m or less, or 10 to 100 *µ*m, or 30 to 70 *µ*m. When the thickness of the insulating layer satisfies the above range, a sufficient insulation effect can be obtained without interfering with other components of the electrode assembly.

Further, such an insulating layer may be formed by coating an insulating liquid or by attaching an insulating tape, and the insulating liquid may include a solvent and an insulating polymer. Additionally, the insulating tape may include polyimide.

Further, the insulating liquid may include a polymer resin and ceramic particles. The polymer resin may include at least one selected from the group consisting of polyethylene, polypropylene, polybutylene, polystyrene, polyethylene terephthalate, natural rubber and synthetic rubber. Among them, polyethylene, polypropylene, and the like, which are excellent in insulating properties and electrolytic solution resistance, can be used.

### Flame Retardant Electrolyte

On the other hand, the lithium secondary battery of one embodiment includes the above-mentioned electrode assembly, and a flame retardant electrolyte containing a flame retardant solvent having a flash point of 100°C or more or having no flash point, and a lithium salt. Such flame retardant solvent may encompass a substantially non-flammable organic solvent having no flash point, and an organic solvent having a high flash point of 100°C or more, or 100 to 250°C, or 110 to 200°C, and low volatility. The lithium secondary battery of one embodiment comprises a flame retardant electrolyte including such a flame retardant solvent and a lithium salt and thereby can exhibit excellent safety and stability. Moreover, since the flame retardant electrolyte can be uniformly impregnated into the above porous coating layer, excellent electrochemical characteristics of the lithium secondary battery can be achieved. The flash point defining the flame retardant solvent can be measured using either a closed tester or open tester according to the standard methods of ASTM D93 or ASTM D1310.

In specific examples, the flame retardant solvent may be an organic solvent having a functional group selected from the group consisting of a functional group that can contribute to low volatility and flame retardancy or non-flammability of organic solvents, for example, sulfone-based functional groups and fluorine-containing functional groups such as fluorine-substituted hydrocarbon groups, and phosphorus-containing functional groups such as phosphate groups or phosphonate groups, and nitrile-based functional groups. More specifically, the flame retardant solvent may include at least one organic solvent selected from the group consisting of a sulfone-based compound, a nitrile-based compound, a phosphoric acid-based compound and a fluorine-substituted carbonate-based compound.

Among them, the sulfone-based compound may comprise at least one selected from the group consisting of a cyclic sulfone-based compound or a linear sulfone-based compound, and specifically, the sulfone-based compound may include at least one selected from the group consisting of sulfolane, ethylmethyl sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

Further, the nitrile-based compound may comprise at least one selected from the group consisting of malononitrile, succinonitrile, glutaronitrile, adiponitrile, suberonitrile, and sebaconitrile.

Further, the phosphoric acid-based compound may comprise at least one selected from the group consisting of dimethyl methylphosphonate, trimethyl phosphate, triethyl phosphate, tributyl phosphate, diethyl ethylphosphonate, dimethyl methylphosphonate, dimethyl(2-methoxyethoxy)methylphosphonate, diethyl(2-methoxyethoxy)methylphosphonate, and triphenyl phosphate.

Additionally, the fluorine-substituted carbonate-based compound may comprise at least one selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 4-(2,2,3,3-tetrafluoropropoxymethyl)-[1,3]-dioxolan-2-one, and bis(2,2,3,3-pentafluoropropyl)carbonate.

Meanwhile, the lithium salt included in the flame retardant electrolyte is used as a medium for transferring ions in a lithium secondary battery. The lithium salt may include, for example, Li⁺ as a cation, and may comprise at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may comprise at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl) imide, LiN(SO₂F)₂), LiBETI (lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), but it is preferable to include LiN(SO₂CF₃)₂ in consideration of excellent stability. In addition to these, the lithium salt commonly used in an electrolyte of a lithium secondary battery can be used without particular limitation.

The concentration of the lithium salt can be changed as appropriate within a generally usable range, but the lithium salt may be included in the flame retardant electrolyte at a concentration of 0.5M to 6M, 1M to 3M, or 1M to 2.5M in the electrolyte in order to obtain an optimal effect of forming a film for preventing corrosion on the electrode surface. When the concentration of the lithium salt satisfies the above range, the effect of improving the cycle characteristics of the lithium secondary battery during high-temperature storage is sufficient, the viscosity of the flame retardant electrolyte is appropriate, so that the impregnation properties of the flame retardant electrolyte can be improved.

Furthermore, the above-mentioned flame retardant electrolyte can prevent the electrolyte from decomposing in a high-power environment and causing a negative electrode collapse, or may optionally further include an electrolyte additive, considering low-temperature high-rate discharge characteristics, high-temperature stability, overcharge prevention, or battery expansion suppression effect at high temperatures.

A representative example of such an electrolyte additive includes at least one selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt compound.

Among them, the cyclic carbonate-based compound may include vinylene carbonate (VC) or vinyl ethylene carbonate. Also, the halogen-substituted carbonate-based compound may include fluoroethylene carbonate (FEC). Further, the sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propene sultone. The sulfate-based compound may include ethylene sulfate (Esa), trimethylene sulfate (TMS), or methyl trimethylene sulfate (MTMS), and the phosphate-based compound may include at least one compound selected from the group consisting of lithium difluoro bis(oxalato)phosphate, lithium difluorophosphate, tetramethyl trimethylsilyl phosphate, and tris(2,2,2-trifluoroethyl)phosphate.

The borate-based compound may include tetraphenylborate, lithium oxalyldifluoroborate (LiODFB), or lithium bis(oxalato)borate (LiB(C₂O₄)₂, LiBOB), and the nitrile-based compound may include at least one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile. In addition, the benzene-based compound may include fluorobenzene, the amine-based compound may include triethanolamine, ethylenediamine, or the like, and the silane-based compound may include tetravinylsilane. Further, the lithium salt-based compound is a compound different from the lithium salt included in the flame retardant electrolyte, wherein the lithium salt-based compound may include lithium nitrate, lithium difluorophosphate (LiDFP), LiPO₂F₂, LiBF₄, or the like.

The above-mentioned electrolyte additive is included in an amount of 0.1 to 10 wt.%, or 0.2 to 8 wt.%, or 0.5 to 8 wt.% based on the total weight of the flame retardant electrolyte, and thereby can contribute to the improvement of ionic conductivity or cycle characteristics.

The above-mentioned lithium secondary battery can be formed by housing the electrode assembly in a case and injecting and impregnating the flame retardant electrolyte therein, and the lithium secondary battery may be cylindrical type, prismatic type, pouch type or coin type battery depending on the shape of the case or the like.

### Method for manufacturing lithium secondary battery

Meanwhile, according to another embodiment of the present invention, there is provided a method for manufacturing the above-mentioned lithium secondary battery. This manufacturing method comprises the steps of: forming a porous coating layer containing polymer particles or ceramic particles having an absolute value of zeta potential of 25 mV or more on an electrode; forming an electrode assembly including an electrode coated with a porous coating layer; and impregnating the electrode assembly with a flame retardant electrolyte containing a flame retardant solvent having a flash point of 100°C or more or having no flash point, and a lithium salt.

In the manufacturing method of the other embodiment, since the method of forming each electrode may follow a general method such as coating a slurry composition for forming each active material layer on an electrode current collector in which an electrode tab is defined, followed by drying and rolling, additional descriptions thereof will be omitted below.

Meanwhile, the step of forming the porous coating layer on the electrode may be performed through a dry step or a wet step. For example, in the case of the dry step, it can be performed by a method of transferring a porous coating layer containing polymer particles or ceramic particles coated on a free-standing or separate substrate, and optionally a polymer binder onto an electrode (e.g., an electrode active material layer).

In addition, in the case of the wet step, it can be performed by a method of coating and drying a slurry containing the polymer particles or ceramic particles, a polymer binder, and a liquid medium onto the electrode (e.g., an electrode active material layer).

For the porous coating layer formed by the above method, an additional rolling step may be performed if necessary.

Meanwhile, the manufacturing method of the other embodiments may further comprise a step of surface-treating the polymer particles or ceramic particles by a method such as plasma, ion beam, or surface coating to adjust the absolute value of the zeta potential to 25 mV or more. As already mentioned above, it is possible to control the surface properties of the polymer particles or ceramic particles through such surface treatment and thereby satisfy the absolute value of the zeta range mentioned above.

At this time, the surface treatment step by plasma or the like may be performed before the polymer particles or ceramic particles are introduced into the slurry for forming the porous coating layer, but it can also be performed after coating the slurry on the electrode.

A representative example of the surface treatment step may include a method of forming oxygen plasma in a reactor and using it to treat the surface of polymer particles or ceramic particles, and thereby, the absolute value of the zeta potential of the particle surface can be increased.

After forming the porous coating layer, both electrodes can be joined and assembled to form an electrode assembly such that the porous coating layer is arranged between the electrodes. At this time, when both the porous coating layers are formed on both electrodes, they can be joined and assembled so as to be in contact with each other, and when the porous coating layer is formed on only one electrode, the porous coating layer can be joined and assembled so as to face the rest of the electrodes.

Subsequently, the step of impregnating the electrode assembly with a flame retardant electrolyte containing a flame retardant solvent and lithium salt can be performed by a general method of injecting the flame retardant electrolyte into a case housing the electrode assembly.

Hereinafter, the invention will be described in more detail with reference to specific examples. However, the following examples are only for facilitating understanding of the invention, and are not intended to limit the scope of the invention.

### Example

First, in the following examples, the zeta potential of polymer particles or ceramic particles was measured by an electrophoretic light scattering method using a dynamic light scattering device (product name: ELS-Z), in a state in which the polymer particles or ceramic particles were dispersed at a concentration of 0.1 wt.% or less in a water solvent at a temperature of 25°C.

Also, the flash point of the (flame retardant) organic solvent contained in the (flame retardant) electrolyte was measured by a closed tester according to the standard method of ASTM D93. Specifically, a sample container was filled with an organic solvent sample, the container was covered and closed with a lid, and then the sample container was heated at a constant rate according to the above standard method. During heating, the sample container was periodically opened to check whether a flame is generated, and the temperature at the time point of flame generation was measured as the flash point.

### Example 1

A positive electrode with a thickness of 60 *µ*m containing Li(Ni_{0.8}Mn_{0.1}Co_{0.1})O₂ as a positive electrode active material, and a negative electrode with a thickness of 75 *µ*m containing artificial graphite as a negative electrode active material were prepared.

Polymethyl methacrylate (PMMA) polymer particles having a zeta potential of -50 mV and a particle size of 1 *µ*m was put and dispersed in N-methyl-2-pyrrolidone (NMP) solvent so that the mass ratio of PMMA: hydrogenated nitrile rubber (H-NBR): polyvinylidene fluoride (PVDF) was 7: 1: 2, thereby preparing a porous coating layer slurry (solid content: 21 wt.%). The resulting coating layer slurry was coated onto a negative electrode rolled after the formation of the negative electrode active material layer, and then dried to form a porous coating layer on the negative electrode (the thickness of the porous coating layer was 30 *µ*m). The porous coating layer of the negative electrode and the positive electrode were arranged in contact with each other to manufacture an electrode assembly.

LiN(SO₂CF₃)₂(LiFSI) was dissolved at a concentration of 1.5 M in a flame retardant solvent sulfolane (flash point: about 165°C) to prepare a flame retardant electrolyte. The electrode assembly was impregnated with a flame retardant electrolyte to manufacture a lithium secondary battery.

### Example 2

A positive electrode with a thickness of 60 *µ*m containing Li(Ni_{0.8}Mn_{0.1}Co_{0.1})O₂ as a positive electrode active material, and a negative electrode with a thickness of 75 *µ*m containing artificial graphite as a negative electrode active material were prepared.

Polymethyl methacrylate (PMMA) polymer particles having a zeta potential of -50 mV and a particle size of 1 *µ*m was put and dispersed in N-methyl-2-pyrrolidone (NMP) solvent so that the mass ratio of PMMA: hydrogenated nitrile rubber (H-NBR): polyvinylidene fluoride (PVDF) was 7: 1: 2, thereby preparing a porous coating layer slurry (solid content: 21 wt.%). The resulting coating layer slurry was coated onto a positive electrode rolled after the formation of the positive electrode active material layer, and then dried to form a porous coating layer on the positive electrode (the thickness of the porous coating layer was 30 *µ*m). The porous coating layer of the positive electrode and the negative electrode were arranged in contact with each other to manufacture an electrode assembly.

LiN(SO₂CF₃)₂(LiFSI) was dissolved at a concentration of 1.5 M in a flame retardant solvent sulfolane (flash point: about 165°C) to prepare a flame retardant electrolyte. The electrode assembly was impregnated with a flame retardant electrolyte to manufacture a lithium secondary battery.

### Example 3

A lithium secondary battery was manufactured in the same manner in Example 1, except that a positive electrode having the porous coating layer formed thereon manufactured in Example 2, and a negative electrode having the porous coating layer formed thereon manufactured in Example 1 were arranged so that the porous coating layers were in contact with each other to manufacture an electrode assembly.

### Example 4

Nine negative electrodes having porous coating layers formed thereon and eight positive electrodes having no porous coating layers thereon were respectively manufactured in the same manner as in Example 1.

Eight positive electrodes were arranged and stacked between each of nine negative electrodes having porous coating layers formed thereon. A polyimide insulating tape was attached to the area ("A" in FIG. 1) corresponding to the position where the positive electrode tab protruded on each of the stacked negative electrodes to form an insulating layer (the thickness of the insulating layer was 60 *µ*m), thereby manufacturing an electrode assembly.

LiN(SO₂CF₃)₂(LiFSI) was dissolved at a concentration of 1.5 M and triethyl phosphate (TEP) at 1 wt.% in sulfolane (flash point: about 165°C) as a flame retardant solvent to prepare a flame retardant electrolyte. The electrode assembly was impregnated with a flame retardant electrolyte to manufacture a lithium secondary battery.

### Example 5

Eight positive electrodes having porous coating layers formed thereon and nine negative electrodes having no porous coating layers thereon were respectively manufactured in the same manner as in Example 2.

Eight positive electrodes having porous coating layers formed thereon were arranged and stacked between each of nine negative electrodes. A polyimide insulating tape was attached to the area ("A" in FIG. 1) corresponding to the position where the positive electrode tab protruded on each of the stacked negative electrodes to form an insulating layer (the thickness of the insulating layer was 60 *µ*m), thereby manufacturing an electrode assembly. At this time, the insulating tape was attached so as to wrap not only the side surface of the negative electrode but also a part of the planar surface of the negative electrode where the negative electrode current collector was exposed without forming the negative electrode active material layer.

LiN(SO₂CF₃)₂(LiFSI) was dissolved at a concentration of 1.5 M and triethyl phosphate (TEP) at 1 wt.% in sulfolane (flash point: about 165°C) as a flame retardant solvent to prepare a flame retardant electrolyte. The electrode assembly was impregnated with a flame retardant electrolyte to manufacture a lithium secondary battery.

### Comparative Example 1

A positive electrode with a thickness of 60 *µ*m containing Li(Ni_{0.8}Mn_{0.1}Co_{0.1})O₂ as a positive electrode active material, and a negative electrode with a thickness of 75 *µ*m containing artificial graphite as a negative electrode active material were prepared.

A separator made of polyolefin was interposed between a positive electrode and a negative electrode having no porous coating layers thereon, thereby manufacturing an electrode assembly.

LiPF₆ was dissolved at a concentration of 1 M in an organic solvent (ethylene carbonate (EC): ethyl methyl carbonate (EMC) = 30:70 volume ratio) to prepare a non-aqueous electrolyte.

The electrode assembly was impregnated into a non-aqueous electrolyte to manufacture a lithium secondary battery.

### Comparative Example 2

A lithium secondary battery was manufactured in the same manner as in Example 1, except that Al₂O₃ ceramic particles having a zeta potential of +20 mV and a particle diameter of 1 *µ*m was used instead of polymethyl methacrylate (PMMA) polymer particles having a zeta potential of -50 mV and a particle diameter of 1 *µ*m to form a porous coating layer on the negative electrode.

### Reference Example 1

A lithium secondary battery was manufactured in the same manner as in Example 1, except that an insulating layer was not formed on the electrode assembly.

### Experimental Example 1 - Evaluation of Thermal Stability

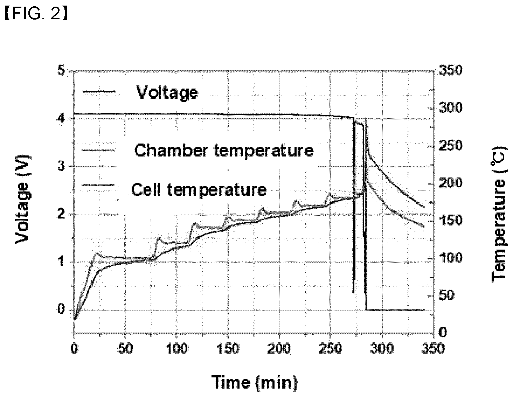

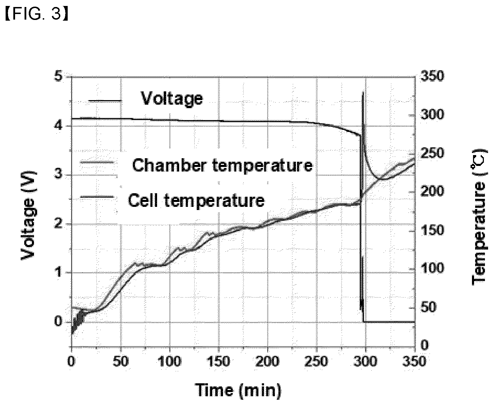

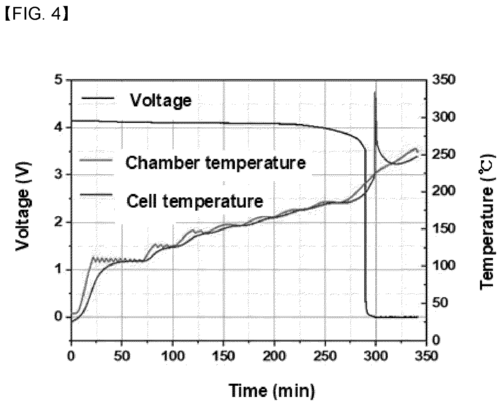

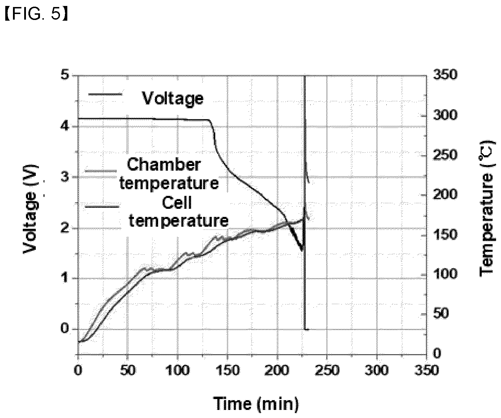

A hot box test was performed on the lithium secondary battery manufactured in Examples 1 to 3, and each lithium secondary battery manufactured in Comparative Example 1, and the results are shown in FIGS. 2 to 5.

Specifically, the hot box test was performed in such a way to raise temperature at 5°C/min from 25°C, and hold the temperature at 100°C, 120°C, 140°C, 150°C, 160°C, 170°C and 180°C for 30 minutes each, and then raise the temperature at 2°C/min up to 200°C. FIGS. 2 to 5 show voltage-temperature changes over time. Further, the ignition start temperature is shown in Table 1 below.

On the other hand, in the case of the lithium secondary battery of Comparative Example 2, it was omitted from the thermal safety evaluation because the flame retardant electrolyte was not impregnated and it was impossible to fully charge, which made it difficult to compare the thermal safety under the same conditions.

**[Table 1]**

| | Ignition start temperature (°C) |
|---|---|
| Example 1 | 196 |
| Example 2 | 192 |
| Example 3 | 205 |
| Comparative Example 1 | 170 |

As shown in FIGS. 2 to 5 and Table 1, it was confirmed that the lithium secondary batteries of Examples 1 to 3 have a higher ignition start temperature and exhibit improved thermal stability as compared with Comparative Example 1.

### Experimental Example 2 - Evaluation of Various Electrochemical Performances

The initial capacity and capacity retention rate were measured for each of the lithium secondary batteries manufactured in Examples 1 to 3, and the lithium secondary battery manufactured in Comparative Example 2, and the results are shown in Table 2 below.

Charging each of the batteries manufactured in Examples 1 to 3 and Comparative Example 2 at 45°C with a constant current of 0.33C to 4.2V and discharging the batteries with a constant current of 0.33C to 3.0V were set as one cycle, and after 200 cycles of charging and discharging, the capacity retention rate was calculated as the ratio of the capacity after 200 cycles to the initial capacity.

**[Table 2]**

| | Initial capacity (Ah) | Capacity retention rate (%) |
|---|---|---|
| Example 1 | 1.98 | 92.8 |
| Example 2 | 1.95 | 91.9 |
| Example 3 | 1.90 | 91.0 |
| Comparative Example 2 | 1.32 | 64.3 |

Referring to Table 2, it was confirmed that the lithium secondary batteries of Examples 1 to 3 exhibit superior capacity characteristics and capacity retention rates compared to the lithium secondary battery manufactured in Comparative Example 2. This is expected to be because the impregnation property of the flame retardant electrolyte in Examples 1 to 3 is excellent due to the zeta potential and dispersibility of the polymer particles contained in the porous coating layer.

### Experimental Example 3 - Short circuit prevention effect

The insulation resistance of each of the lithium secondary batteries manufactured in Examples 4 and 5 and Reference Example 1 was measured to evaluate the short circuit prevention effect.

Specifically, the insulation resistance at 50V of each of the lithium secondary batteries manufactured in Examples 4 and 5 and Comparative Example 1 was measured using a Hioki insulation resistance meter, and the results are shown in Table 3 below.

**[Table 3]**

| | Insulation resistance (ohm) |
|---|---|
| Example 4 | 50×10⁸ |
| Example 5 | 50×10⁸ |
| Reference Example 1 | 6×10⁸ |

Referring to Table 3, it was confirmed that the lithium secondary batteries of Examples 4 and 5 had an excellent short circuit prevention effect due to the additional formation of the insulating layer.

## Claims

1. A lithium secondary battery comprising:
an electrode assembly containing an electrode and a porous coating layer formed on the electrode; and
a flame retardant electrolyte containing a flame retardant solvent having a flash point of 100°C or more or having no flash point, and a lithium salt,
wherein the porous coating layer comprises polymer particles or ceramic particles having an absolute value of zeta potential of 25 mV or more.

2. The lithium secondary battery according to claim 1, wherein:
the polymer particles comprise at least one selected from the group consisting of polymethyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, polyethylene terephthalate, and polyphenylene sulfide.

3. The lithium secondary battery according to claim 1, wherein:
the ceramic particles comprise at least one selected from the group consisting of boehmite, Al₂O₃, TiO₂, Fe₂O₃, SiO₂, ZrO₂, Co₃O₄, SnO₂, NiO, ZnO, V₂O₅, and MnO.

4. The lithium secondary battery according to claim 1, wherein:
the polymer particles or ceramic particles have a particle size of 50 nm to 3 *µ*m.

5. The lithium secondary battery according to claim 1, wherein:
the porous coating layer comprises a polymer binder, and the polymer particles or ceramic particles dispersed on the polymer binder.

6. The lithium secondary battery according to claim 5, wherein:
the porous coating layer comprises the polymer binder: the polymer particles or ceramic particles in a weight ratio of 5:95 to 40:60.

7. The lithium secondary battery according to claim 1, wherein:
the porous coating layer has a thickness of 5 to 50 *µ*m and comprises a plurality of pores having a diameter of 10 nm or more.

8. The lithium secondary battery according to claim 1, wherein:
the flame retardant solvent comprises at least one organic solvent having a functional group selected from the group consisting of a sulfone-based functional group, a fluorine-containing functional group, a phosphorus-containing functional group and a nitrile-based functional group.

9. The lithium secondary battery according to claim 1, wherein:
the flame retardant solvent comprises at least one organic solvent selected from the group consisting of a sulfone-based compound, a nitrile-based compound, a phosphoric acid-based compound and a fluorine-substituted carbonate-based compound.

10. The lithium secondary battery according to claim 9, wherein:
the sulfone-based compound comprises at least one selected from the group consisting of sulfolane, ethylmethyl sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

11. The lithium secondary battery according to claim 9, wherein:
the nitrile-based compound comprises at least one selected from the group consisting of malononitrile, succinonitrile, glutaronitrile, adiponitrile, suberonitrile, and sebaconitrile.

12. The lithium secondary battery according to claim 9, wherein:
the phosphoric acid-based compound comprises at least one selected from the group consisting of dimethyl methylphosphonate, trimethyl phosphate, triethyl phosphate, tributyl phosphate, diethyl ethylphosphonate, dimethyl(2-methoxyethoxy)methylphosphonate, diethyl(2-methoxyethoxy)methylphosphonate, and triphenyl phosphate.

13. The lithium secondary battery according to claim 9, wherein:
the fluorine-substituted carbonate-based compound comprises at least one selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 4-(2,2,3,3-tetrafluoropropoxymethyl)-[1,3]-dioxolan-2-one, and bis(2,2,3,3-pentafluoro-propyl)carbonate.

14. The lithium secondary battery according to claim 1, wherein:
the lithium salt comprises LiN(SO₂CF₃)₂.

15. The lithium secondary battery according to claim 1, wherein:
the flame retardant electrolyte contains the lithium salt at a concentration of 0.5M to 6M.

16. The lithium secondary battery according to claim 1, wherein:
the electrode assembly comprises a positive electrode having a positive electrode tab; a negative electrode having a negative electrode tab; and the porous coating layer formed on the positive electrode or the negative electrode so as to be arranged between the positive electrode and the negative electrode, and
further comprises an insulating layer that covers a conductive surface of the negative electrode at a position corresponding to the positive electrode tab.

17. The lithium secondary battery according to claim 16, wherein:
the insulating layer covers a negative electrode side surface corresponding to the positive electrode tab, and an exposed plane where the porous coating layer is not formed among the negative electrode planes facing the positive electrode.

18. The lithium secondary battery according to claim 16, wherein:
the porous coating layer is formed on the positive electrode and the negative electrode, respectively, wherein the porous coating layer formed on the negative electrode and the porous coating layer formed on the positive electrode are in contact with each other.

19. A method for manufacturing a lithium secondary battery, the method comprising the steps of:
forming a porous coating layer containing polymer particles or ceramic particles having an absolute value of zeta potential of 25 mV or more on an electrode;
forming an electrode assembly including an electrode coated with a porous coating layer; and
impregnating the electrode assembly with a flame retardant electrolyte containing a flame retardant solvent having a flash point of 100°C or more or having no flash point, and a lithium salt.

20. The method for manufacturing a lithium secondary battery according to claim 19, further comprising:
plasma-treating the polymer particles or ceramic particles to adjust the absolute value of the zeta potential to 25 mV or more.

21. The method for manufacturing a lithium secondary battery according to claim 19, wherein:
the forming a porous coating layer comprises coating a slurry containing the polymer particles or ceramic particles, a polymer binder, and a liquid medium onto the electrode and drying it.
